# EUROPEAN PATENT SPECIFICATION

(11) **EP 0 970 354 B1**
(45) Date of publication and mention of the grant of the patent: **06.08.2003**
(21) Application number: 98907138.6
(22) Date of filing: 24.03.1998
(51) Int. Cl.: G01L 3/10

(54) **METHOD OF MAKING INTEGRAL MAGNETOELASTIC TRANSDUCER**
VERFAHREN ZUR HERSTELLUNG EINES INTEGRIERTEN MAGNETOELASTISCHEN WANDLERS
PROCEDE DE FABRICATION D'UN TRANSDUCTEUR MAGNETOELASTIQUE INTEGRE

(30) Priority: 28.03.1997 US 829125
(43) Date of publication of application: 12.01.2000
(73) Proprietor: Siemens Aktiengesellschaft, 80333 München (DE)
(72) Inventor: KILMARTIN, Brian, NL-5656 AA Eindhoven (NL); OPIE, John E., Stony Creek, CT 06405 (US)
(74) Representative: Payne, Janice Julia
(86) International application number: PCT/IB98/00440
(87) International publication number: WO 98/044324

(56) References cited:
- US-A- 4 823 617
- PATENT ABSTRACTS OF JAPAN vol. 096, no. 012, 26 December 1996 & JP 08 210931 A (NIPPON KEIKI SEISAKUSHO:KK), 20 August 1996,
- PATENT ABSTRACTS OF JAPAN vol. 013, no. 366 (E-806), 15 August 1989 & JP 01 123487 A (YASKAWA ELECTRIC MFG CO LTD), 16 May 1989,

## Description

### Background of the Invention

### 1. Field of the Invention

The invention relates to torque sensing and, in particular, to a method for making a transducer for measuring torsional stress within a member.

### 2. Description of Related Art

There are many applications where it is desirable to sense the torsional stress of a torque-carrying member without contacting the member. One type of apparatus for doing this includes a magnetoelastic material, which is intimately bonded to the torque-carrying member, and one or more magnetic field detectors, disposed proximate the magnetoelastic material, for sensing changes in a predefined magnetic field that passes through the material. These changes are indicative of torsional stresses within the torque-carrying member.

Many versions of this type of magnetoelastic torque sensor have been proposed.

To the knowledge of applicants, however, none has been widely adopted.

Purported failings of such prior art magnetoelastic torque sensors are pointed out in U.S. Patent 5,520,059. This patent proposes a torque sensor that utilizes one or more torque transducers in the form of circumferentially-polarized rings of magnetostrictive material, which are attached to a torque carrying member, each producing a respective magnetic field with a direction that varies as a function of the torque being carried by the member. This torque is measured indirectly, by utilizing magnetic field sensor means for detecting the variable magnetic field produced by the one or more rings.

U.S. Patent Application 08/768,739, filed on 4 December 1996, WO 98/25 116, describes a magnetoelastic torque sensor with a compact shielding and flux-guiding structure for improving torque-sensing capabilities. Such a structure is especially useful in environments where the torque sensor is exposed to strong ambient magnetic fields, which may be substantially stronger than the fields produced by the known torque-transducer rings of magnetostrictive material.

Nevertheless, it is still desirable to provide a magnetoelastic torque transducer which produces a stronger magnetic field. It is also desirable to avoid problems associated with a magnetoelastic ring that is shrink fitted to a member in which torsional stresses are to be sensed. A shrink-fitted ring is difficult to attach to the member, inherently has large internal stresses, tends to be frangible, and is not well suited for rough-duty uses, such as in the automotive and industrial fields.

### Summary of the Invention

It is an object of the invention to provide a method for producing a magnetoelastic torque transducer with an increased magnetic field strength.

It is another object of the invention to provide a method for producing such a torque transducer which is integrally bonded to a member in which torsional stress is to be sensed and is well suited for rough-duty use.
In accordance with the invention, a method for providing, on a member having a longitudinal axis, a magnetoelastic transducer for producing an internally-contained magnetic field which has a circumferential orientation around the axis when the member is in a quiescent state, but which distorts from the circumferential orientation when a substantial torsional stress is applied to the member about said axis and produces a measurable external magnetic-field component representative of said stress, comprises the steps of
applying to a surface region of the member which surrounds the axis a circumferential coating consisting essentially of a magnetostrictive material which is at a temperature exceeding the curie temperature of said material;
allowing the coating to cool to a temperature lower than said curie temperature; and
at least while said coating temperature is lower than said curie temperature, applying a magnetic field to the coating to magnetically polarize said coating in a predefined circumferential direction around the axis.

This facilitates freedom of formation of magnetic domains in the magnetostrictive material. In a preferred embodiment of the invention, the polarizing magnetic field is also applied while the coating is being applied

### Brief Description of the drawing

Figures 1A and 1B are front views, partly in cross section, of a preferred embodiment of a torque sensing apparatus employing a torque transducer made in accordance with the invention.
Figures 2A and 2B show a method of making a torque transducer in accordance with the invention.
Figure 3 shows in greater detail a magnetizing apparatus illustrated in Figure 2B.

### Description of the Preferred Embodiments

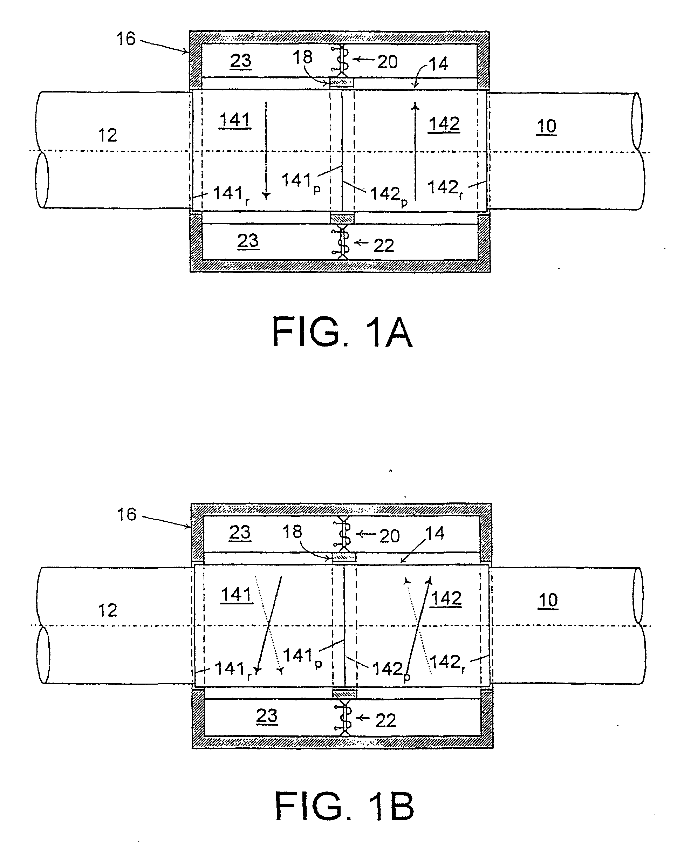

Figure 1A illustrates a preferred embodiment of a torque sensing apparatus having a transducer made in accordance with the invention. In this exemplary embodiment, the torque-carrying member is in the form of a cylindrical shaft 10 having a torque applied about a central longitudinal axis 12. Preferably, the shaft comprises a non-magnetically permeable material, such as a stainless steel or aluminum. The torque sensing apparatus includes a magnetoelastic transducer in the form of an annulus 14, a magnetic-field-guiding housing 16, a magnetic-field-guiding ring 18, and first and second magnetic field detectors 20 and 22, respectively. The detectors 20 and 22 and the ring 18 are held in place by a molded annular positioning member 23 of a plastic material, such as nylon.

The magnetoelastic annulus 14 includes first and second annular parts 141 and 142 of a magnetically anisotropic material which is intimately bonded to a stress-carrying portion of the shaft 10. Each of these annular parts has an easy axis oriented circumferentially around the longitudinal axis 12. By "intimate bonding" it is meant that the parts are sufficiently closely attached to the shaft 10 to experience torsional stress carried by the shaft. The two parts 141 and 142 of the annulus 14 may be separate annular elements or may be formed as portions of a single continuous element. In either case, these parts are magnetically polarized in opposite circumferential directions around the axis 12, as is indicated by the arrows shown in Figure 1A. Circular edges of the magnetoelastic annulus 14 define remote boundaries 141ᵣ and 142ᵣ of the annular parts 141 and 142, respectively. These boundaries are remote with respect to boundaries 141ₚ and 142ₚ, respectively, which are proximate with respect to each other. In the case where parts 141 and 142 are portions of a single continuous element, the boundaries 141ₚ and 142ₚ are preferably contiguous to simplify construction. Alternatively, these boundaries may be spaced apart to form separate annular parts.

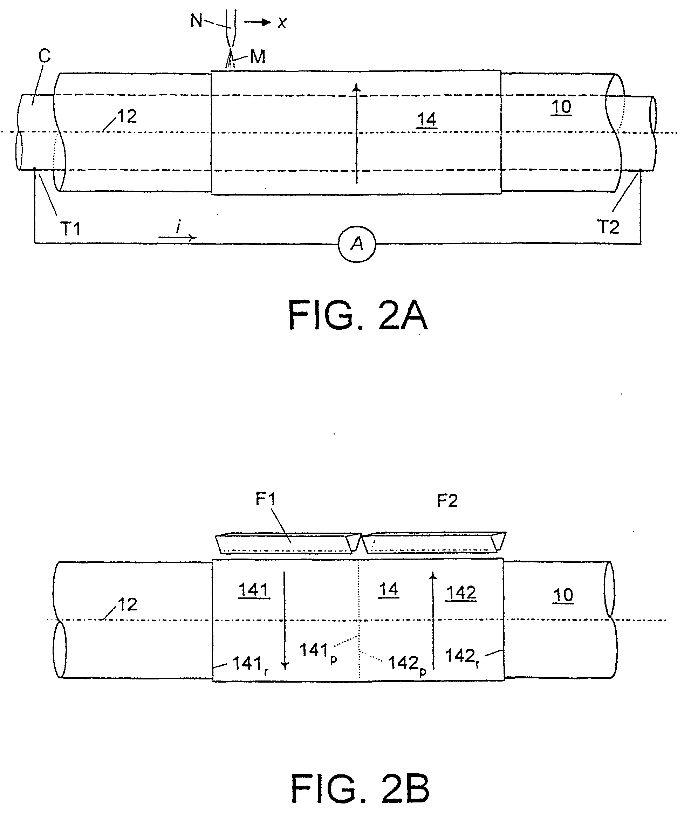

Figures 2A and 2B illustrate a preferred method for providing the magnetoelastic annulus 14 on the stress-carrying portion of the shaft member 10. As shown in Figure 2A a magnetostrictive material M is sprayed onto the shah 10 from a nozzle N of a spraying apparatus. The material M is applied to the shaft at a temperature which exceeds its curie temperature. This may be done, for example, by using a thermal spraying or a cold spraying process. If a thermal-spraying process is used, the material M is pre-heated to a temperature at which it is in a plastic state before it is forced through the nozzle N. If a cold-spraying process is used, solid particles of the material M are accelerated by a supersonic jet of gas at a temperature which is appreciably lower than the melting temperature of the particles. With either of these types of spraying, on impact with the shaft, the particles instantaneously heat to a temperature above the curie temperature.

During spraying of the magnetostrictive material M, the nozzle N is moved axially, in the direction X, while the shaft 10 is rotated about the axis 12. The axial speed of the nozzle relative to the rate of rotation of the shaft determines the thickness of the coating which forms the annulus 14. Alternatively, the shaft may be held in place while the nozzle is moved axially, and indexed to an adjacent angular or rotary position each time a line of material is deposited on the shaft.

As is further shown in Figure 2A, the shaft 10 preferably is arranged coaxially around a hollow electrical conductor C. This is a simple, but effective, arrangement for circumferentially polarizing the magnetic domains in the coating 14. One manner of rotating the shaft is via a belt-driven chuck in which the shaft is held. The conductor C is a pipe of an electrically-conductive material, such as copper, which has a low magnetic permeability. The hollow conductor C is electrically connected at axially-separated points T1 and T2 to a source A of electrical current *I*. By passing a direct current through the conductor C, a circumferential magnetic field is produced about the conductor. Because of the high magnetic permeability of the coating material, relative to the materials of the shaft 10 and the conductor C, the circumferential magnetic field is concentrated in the coating 14. Because the conductor C is hollow, coolant may be passed through the conductor to enable high electrical currents to be used. Alternatively, if the member 14 is solid or does not have a hollow interior that is sufficiently large to accomodate a pipe, and is a good electrical conductor, the electrical current can be passed directly through the member 14.

In order to circumferentially polarize the coating 14, a direct current is passed through the conductor C after spraying is completed and the coating has cooled below the curie temperature of the magnetoelastic material M. Advantageously, a direct current is also passed through the conductor C during the spraying process. By utilizing a current *I* in the direction indicated by the arrow, the coating 14 is sprayed through the surrounding circumferential magnetic field and is magnetically polarized in the circumferential direction indicated by the arrow on the coating.

Following is some exemplary data for a circumferentially-polarized magnetoelastic transducer coating formed on a hollow shaft with a water-cooled internal copper pipe, as described above:
Thermal spray gun = model 5220 from Tafa, Inc., Concord, NH
Particle velocity = 3000 - 3400 feet per second
M = #1166F nickel powder from Tafa, Inc., Concord, NH
Curie temp. = 360° C
Axial speed of nozzle N in X direction = 120 inches/minute
RPM of shaft = 600
Thickness of coating 14 = 0.010 inch
Current *I* through pipe C during spraying = 500 amps DC
Current *I* through pipe C after cooling = 500 amps for 2 minutes

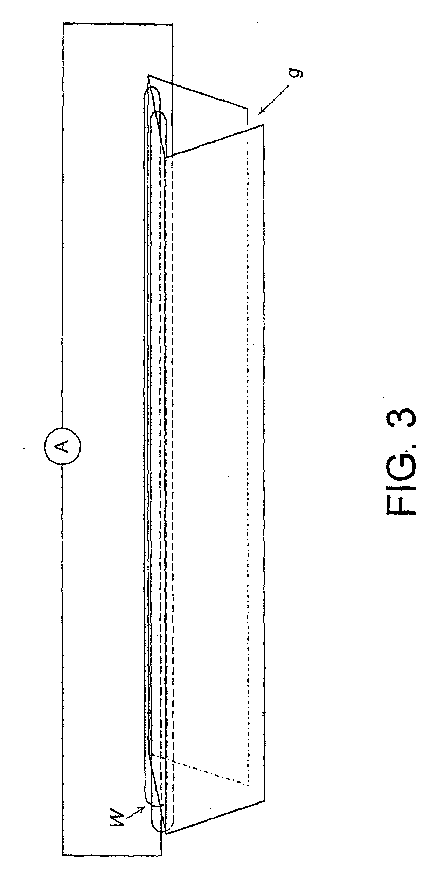

Figure 2B illustrates an alternative method of magnetizing the coating 14 (or first and second separate coatings that are adjacent at boundaries 141ₚ and 142ₚ, respectively) to form the annular parts 141 and 142. These parts are magnetically polarized in the opposite circumferential directions around the axis 12 that are indicated by the arrows on the respective parts. The opposite magnetization of these parts is achieved by use of first and second flux-guiding magnetizers F1 and F2, one of which is shown enlarged and in more detail in Figure 3.

Each of these magnetizers includes a plate of high magnetic permeability material which is bent into a shape that, in end view, approximates a trapezoid with an open end. The open end forms an air gap g at which the magnetic field produced by the magnetizer is coupled into the magnetoelastic coating 14. The magnetic field is developed in the magnetizer via a winding W which is supplied direct current by a source A. The windings for the magnetizers F1 and F2 are supplied with respective direct currents flowing in opposite directions from each other to establish the opposite polarity magnetic fields shown by the arrows in Figure 2B. The circumferential magnetization of the first and second annular parts 141 and 142 is achieved by rotating the shaft 10 around axis 12 with the air gaps g of the magnetizers F1 and F2 positioned in close proximity to the parts.

Operation of the torque-sensing apparatus of Figure 1A can be better understood by referring to Figures 1A and 1B together. Figure 1A illustrates the situation that exists when no torque is applied to the shaft 10. In this situation, the magnetoelastic annulus 14 is in a state of equilibrium and the polarized magnetic fields in the first and second parts 141 and 142 are oriented circumferentially, but oppositely, around the longitudinal axis 12 in the directions indicated by the respective arrows.

Figure 1B illustrates two different situations that may exist when torque is applied to the shaft 10 around the axis 12, thus applying torsional stress to the magnetoelastic annulus 14. If torque is applied in a clockwise direction, to either end of the shaft, the resulting stress in the first and second parts 141 and 142 causes the respective polarized magnetic fields to become oriented helically in the directions indicated by the solid-line arrows. Each of these magnetic fields has an axial component which is directed from the respective one of the proximate boundaries 141ₚ & 142ₚ to the respective one of the remote boundaries 141ᵣ & 142ᵣ. These axial components are coupled out of the annulus 14 at the remote boundaries, through the housing 16, radially-inwardly through detectors 20 and 22, and are coupled back into the annulus at the proximate boundaries by the ring 18. Conversely, if torque is applied in a counter-clockwise direction, to either end of the shaft, the resulting stress in the first and second parts 141 and 142 causes the respective polarized magnetic fields to become oriented helically in the directions indicated by the broken-line arrows. Each of these magnetic fields has an axial component which is directed from the respective one of the remote boundaries 141ᵣ & 142ᵣ to the respective one of the proximate boundaries 141ₚ & 142ₚ. These axial components are coupled out of the annulus 14 at the proximate boundaries, through the ring 18, radially-outwardly through detectors 20 and 22, and are coupled back into the annulus at the remote boundaries by the housing 16.

## Claims

1. A method for providing, on a member having a longitudinal axis, a magnetoelastic transducer for producing an internally-contained magnetic field which has a circumferential orientation around the axis when the member is in a quiescent state, but which distorts from the circumferential orientation when a substantial torsional stress is applied to the member about said axis and produces a measurable external magnetic-field component representative of said stress, said method comprising the steps of:
a. applying to a surface region of the member which surrounds the axis a circumferential coating consisting essentially of a magnetostrictive material which is at a temperature exceeding the curie temperature of said material;
b. allowing the coating to cool to a temperature lower than said curie temperature; and
c. at least while said coating temperature is lower than said curie temperature, applying a magnetic field to the coating to magnetically polarize said coating in a predefined circumferential direction around the axis.

2. A method as in claim 1, where first and second axially-extending parts of the coating are magnetically polarized in opposite first and second circumferential directions around the axis.

3. A method according to claim 1, wherein said magnetoelastic transducer comprises first and second magnetoelastic transducer parts;
wherein said magnetic field comprises respective first and second magnetic fields;
wherein said surface region comprises first and second surface regions;
wherein said circumferential coating comprises first and second circumferential coatings; and,
wherein said predefined circumferential direction comprises opposite first and second circumferential directions around the axis.

4. A method as in claim 1, where the magnetostrictive material comprises nickel.

5. A method as in claim 1, wherein the coating is formed on the member by applying the magnetostrictive material at a temperature which exceeds the curie temperature of said material.

6. A method as in claim 1, where the coating is formed on the member by a spraying process.

7. A method as in claim 6, where the coating is formed on the member by a thermal spraying process.

8. A method as in claim 6, where the coating is formed on the member by a cold spraying process.

9. A method as in claim 6, where said spraying process in effected by spraying the magnetostrictive material through a magnetic field which circumferentially surround the axis at least in a space where the coating if formed.

10. A method as in claim 1, where the coating is magnetically polarized by producing a magnetic field which circumferentially surrounds the axis at least in space occupied by said coating.

11. A method as in claim 1, where the member comprises a shaft.

## Patentansprüche

1. Verfahren zur Anbringung eines magnetoelastischen Messwandlers an einem eine Längsachse aufweisenden Bauteil zur Erzeugung eines im Inneren des Bauteils enthaltenen Magnetfeldes, welches eine Orientierung in Umfangsrichtung um die Achse herum aufweist, wenn sich das Bauteil in einem Ruhezustand befindet, welches jedoch verzerrt wird, so dass es von der Orientierung in Umfangsrichtung abweicht, wenn eine wesentliche Verdrehungsspannung um die besagte Achse herum auf das Bauteil einwirkt, und eine messbare äußere Komponente des Magnetfeldes erzeugt, die für die besagte Spannung repräsentativ ist, wobei das besagte Verfahren die folgenden Schritte umfasst:
a. Aufbringen eines im Wesentlichen aus einem magnetostriktiven Material bestehenden, sich in Umfangsrichtung erstreckenden Überzugs, welcher eine die Curie-Temperatur des besagten Materials übersteigende Temperatur aufweist, auf einen Oberflächenbereich des Bauteils, welcher die Achse umgibt;
b. Abkühlenlassen des Überzugs auf eine Temperatur, die niedriger als die besagte Curie-Temperatur ist; und
c. wenigstens solange die besagte Temperatur des Überzugs niedriger als die besagte Curie-Temperatur ist, Anlegen eines Magnetfeldes an den Überzug, um den besagten Überzug in einer vordefinierten Umfangsrichtung um die Achse herum magnetisch zu polarisieren.

2. Verfahren nach Anspruch 1, wobei der erste und der zweite sich in axialer Richtung erstreckende Teil des Überzugs in einer ersten und einer zweiten Umfangsrichtung um die Achse herum, die zueinander entgegengesetzt sind, magnetisch polarisiert sind.

3. Verfahren nach Anspruch 1, wobei der besagte magnetoelastische Messwandler ein erstes und ein zweites Teil des magnetoelastischen Messwandlers umfasst;
wobei das besagte Magnetfeld ein jeweiliges erstes und zweites Magnetfeld umfasst;
wobei der besagte Oberflächenbereich einen ersten und einen zweiten Oberflächenbereich umfasst;
wobei der besagte sich in Umfangsrichtung erstreckenden Überzug einen ersten und einen zweiten umfasst; und
wobei die besagte vordefinierte Umfangsrichtung eine erste und eine zweite Umfangsrichtung um die Achse herum, die zueinander entgegengesetzt sind, umfasst.

4. Verfahren nach Anspruch 1, wobei das magnetostriktive Material Nickel umfasst.

5. Verfahren nach Anspruch 1, wobei der Überzug auf dem Bauteil hergestellt wird, indem das magnetostriktive Material bei einer Temperatur aufgebracht wird, welche die Curie-Temperatur des besagten Materials übersteigt.

6. Verfahren nach Anspruch 1, wobei der Überzug auf dem Bauteil mittels eines Spritzvorgangs hergestellt wird.

7. Verfahren nach Anspruch 6, wobei der Überzug auf dem Bauteil mittels eines Vorgangs des thermischen Spritzens hergestellt wird.

8. Verfahren nach Anspruch 6, wobei der Überzug auf dem Bauteil mittels eines Vorgangs des Kaltspritzens hergestellt wird.

9. Verfahren nach Anspruch 6, wobei der besagte Spritzvorgang durchgeführt wird, indem das magnetostriktive Material durch ein Magnetfeld gespritzt wird, welches die Achse wenigstens in einem Raum, in dem der Überzug hergestellt wird, in Umfangsrichtung umgibt.

10. Verfahren nach Anspruch 1, wobei der Überzug magnetisch polarisiert wird, indem ein Magnetfeld erzeugt wird, welches die Achse wenigstens in dem Raum, der von dem besagten Überzug eingenommen wird, in Umfangsrichtung umgibt.

11. Verfahren nach Anspruch 1, wobei das Bauteil eine Welle umfasst.

## Revendications

1. Procédé pour ménager, sur un élément ayant un axe longitudinal, un transducteur magnétoélastique pour produire un champ magnétique contenu intérieurement qui a une orientation circonférentielle autour de l'axe lorsque l'élément est à l'état de repos, mais qui s'écarte de l'orientation circonférentielle lorsqu'une contrainte substantielle de torsion est appliquée à l'élément autour de l'axe et produit une composante de champ magnétique extérieur mesurable et représentative de la contrainte, le procédé comprenant les stades consistant :
a. à appliquer à une région de la surface de l'élément qui entoure l'axe un revêtement circonférentiel consistant essentiellement en une matière magnétostrictive qui est à une température supérieure au point de curie de la matière ;
b. à laisser le revêtement se refroidir à une température inférieure au point de curie ; et
c. au moins, alors que la température du revêtement est inférieure au point de curie, à appliquer un champ magnétique au revêtement pour polariser magnétiquement le revêtement dans un sens circonférentiel défini à l'avance autour de l'axe.

2. Procédé suivant la revendication 1, dans lequel des première et deuxième parties s'étendant axialement du revêtement sont polarisées magnétiquement dans des premier et deuxième sens circonférentiels opposés autour de l'axe.

3. Procédé suivant la revendication 1, dans lequel le transducteur magnétoélastique comprend des première et deuxième parties magnétoélastiques de transducteur ;
dans lequel le champ magnétique comprend des premier et deuxième champs magnétiques respectifs ;
dans lequel la région de la surface comprend des première et deuxième régions de la surface ;
dans lequel le revêtement circonférentiel comprend des premier et deuxième revêtements circonférentiels ; et
dans lequel le sens circonférentiel défini à l'avance comprend des premier et deuxième sens circonférentiels opposés autour de l'axe.

4. Procédé suivant la revendication 1, dans lequel la matière magnétostrictive comprend du nickel.

5. Procédé suivant la revendication 1, dans lequel on forme le revêtement sur l'élément en appliquant la matière magnétostrictive à une température qui dépasse le point de curie de la matière.

6. Procédé suivant la revendication 1, dans lequel on forme le revêtement par une opération de pulvérisation.

7. Procédé suivant la revendication 6, dans lequel on forme le revêtement sur l'élément par une opération de pulvérisation thermique.

8. Procédé suivant la revendication 6, dans lequel on forme le revêtement sur l'élément par une opération de pulvérisation à froid.

9. Procédé suivant la revendication 6, dans lequel on effectue l'opération de pulvérisation en pulvérisant la matière magnétostrictive dans un champ magnétique qui entoure circonférentiellement l'axe, au moins dans un espace où le revêtement est formé.

10. Procédé suivant la revendication 1, dans lequel on polarise magnétiquement le revêtement en produisant un champ magnétique qui entoure circonférentiellement l'axe, au moins dans un espace occupé par le revêtement.

11. Procédé suivant la revendication 1, dans lequel l'élément comprend un arbre.
